# EUROPEAN PATENT SPECIFICATION

(11) **EP 4 386 709 B1**
(45) Date of publication and mention of the grant of the patent: **02.12.2026**
(21) Application number: 22213160.9
(22) Date of filing: 13.12.2022
(51) Int. Cl.: G08G 1/00

(54) **LONGITUDINAL OFFSETS TO A PREDEFINED PATH**
LONGITUDINALER VERSATZ ZU EINEM VORDEFINIERTEN PFAD
DÉCALAGES LONGITUDINAUX EN UN TRAJET PRÉDÉFINI

(43) Date of publication of application: 19.06.2024
(73) Proprietor: Volvo Autonomous Solutions AB, 405 08 Göteborg (SE)
(72) Inventor: SKILLSÄTER, Calle, 644 36 Torshälla (SE); GÖTLIND, Helena, 438 53 Hindås (SE); SJÖBERG, Johan, 722 19 Västerås (SE)
(74) Representative: Valea AB

(56) References cited:
- AU-A1- 2021 241 931
- JP-A- 2009 043 091
- US-A1- 2007 179 690
- US-A1- 2020 079 388

## Description

### TECHNICAL FIELD

The invention relates generally to path determination for vehicles. In particular embodiments, the invention relates to determining longitudinal offsets to a predefined path. The invention can be applied in heavy-duty vehicles, such as trucks, buses, and construction equipment. Although the invention may be described with respect to a particular vehicle, the invention is not restricted to any particular vehicle.

### BACKGROUND

For predefined paths travelled by autonomous vehicles, path qualities are rapidly decreased compared to paths exposed to manually driven vehicles. Already after a few driving events, rugged areas, potholes, deformation, ruts, and areas with loose ground and mud emerges. Due to the high wear, maintenance is needed often which reduces productivity as the respective path cannot be used during the maintenance. Furthermore, control of vehicles on paths with high wear is degraded as the vehicle may partially slide into potholes and tracks caused by the wear.

Hence, there is a strive to reduce wear for paths driven by autonomous vehicles.

AU 2021241 931 A1 discloses an autonomous travel system for unmanned vehicles that travel on predefined paths defined by nodes, where vehicles use common offset information to determine offset amounts for their target tracks to suppress rut generation.

JP 2009 043091 A discloses a driving support device that sets different stop positions for vehicles at different distances from a reference position to reduce road surface damage.

### SUMMARY

The invention is set out in the appended set of claims. According to a first aspect of the invention, a computer system in accordance with appended claim 1 is provided.

The first aspect of the invention may seek to reduce wear of the predefined path and to improve the productivity for the at least one vehicle operating therein.

A technical benefit of the first aspect may comprise a reduced wear of the predefined path and an improved productivity of the at least one vehicle.

The reduced wear of the predefined path and improved productivity of the at least one vehicle is achieved as the at least one vehicle is triggered to operate in the predefined path using the adjusted configuration.

This is since the at least one vehicle will, using the adjusted configuration, perform the respective operation of the at least one position, at a respective offset of the at least one position in the configuration. In other words, at least one operation affecting the longitudinal motion of the at least one vehicle will be performed at a respective updated different position of the predefined path.

Performing operations at different updated positions reduces the wear of the predefined path. This is since each operation affecting the longitudinal motion of the at least one vehicle applies a respective load on a surface of the predefined path which creates an increased wear at that location, and when the respective load on the surface of each operation is performed iteratively at the same exact place, the wear of the predefined path is increased for each operation. Moreover, when multiple types of vehicles operate in the predefined path, offsetting the different types of vehicles differently may more efficiently distribute wear in the predefined path caused by their respective operations affecting longitudinal motion of the respective vehicle.

Due to the offset in the adjusted configuration, operations are at least partly distributed in the predefined path with the adjusted configuration. As a consequence, wear is thereby reduced in the predefined path as the wear imposed by the operations in the predefined path is spread out to different positions. Since wear is reduced, maintenance is not needed as often and productivity in the predefined path is increased.

According to a second aspect of the invention, a computer-implemented method in accordance with appended claim 2 is provided.

The second aspect of the invention may seek to reduce wear of the predefined path and to improve the productivity of the at least one vehicle operating therein.

A technical benefit of the second aspect may comprise a reduced wear of the predefined path and an improved productivity of the at least one vehicle. The technical benefit of the second aspect corresponds to the technical benefit of the first aspect.

Examples below are relevant for all aspects of exemplary embodiments herein, including the first aspect of the disclosure and the second aspect of the disclosure.

In some examples, each respective operation of the configuration comprises any one or more out of:
- adjusting a speed and/or acceleration of the at least one vehicle,
- halt operation performed by the at least one vehicle,
- braking and/or decelerating the at least one vehicle, and
- shifting gear of the at least one vehicle.

The above operations affects wear in the predefined path and can be at least partially offset to be performed earlier or later in the predefined path. Hence, in this way, reduced wear of the predefined path is achieved as one or more out of the above operations are distributed to different positions in the predefined path.

In some examples, the configuration comprises at least one pair of start and end operations such that a start operation is configured to be performed at a start position and a corresponding end operation is configured to be performed at an end position. In these examples, adjusting the configuration comprises offsetting the start position and/or the end position. The start position and end position may be offset independently or in a corresponding manner.

As one example, the at least one pair of start and end operations comprises any one out of:
- a start operation to start braking the at least one vehicle at the start position and an end braking operation to end braking the at least one vehicle at the end position; and/or
- a start operation to start a speed and/or acceleration increase of the at least one vehicle at the start position and an end operation to end the speed and/or acceleration increase of the at least one vehicle at the end position.

In this way, reduced wear of the predefined path is achieved as the operation of the start and/or the end position can be offset individually and/or to collectively to maintain a distance between the pair of start and end operations.

In some examples, obtaining the at least one distance to use as an offset for the at least one position of the configuration comprises any one or more out of:
- obtaining at least one predefined distance, and/or
- obtaining at least one distance based on a number generation from a random number generator and/or a pseudo-random number generator.

In some examples, obtaining the at least one distance to use as an offset for the at least one position of the configuration further comprises obtaining at least one condition of the predefined path. In these examples, determining the at least one distance is based on the obtained at least one condition. In these examples, the at least one condition of the predefined path may pertain to any one or more out of:
- a driving condition of at least one part of the predefined path,
- a safety condition of at least one part of the predefined path,
- activities and/or events occurring in at least one part of the predefined path,
- obstacles in at least one part of the predefined path,
- at least one other vehicle in at least one part of the predefined path, and
- human actors and/or animals in at least one part of the predefined path.

In some examples, obtaining, for each type of vehicle in the at least one vehicle, the at least one type-dependent distance comprises:
- based on the respective type of vehicle, obtaining an interval comprising a maximum distance and a minimum distance for the respective type of vehicle, and
- obtaining the at least one type-dependent distance based on determining the at least one type-dependent distance from the obtained interval based on a number generated from a random number generator and/or a pseudo-random number generator.

In this way, reduced wear of the predefined path is achieved as each vehicle of a respective type may perform their respective operation affecting a longitudinal motion of the respective vehicle at different positions in the predefined path.

In some examples, the method further comprises obtaining an iteration number. The iteration number may be indicative of any one of:
- a number of times the at least one vehicle has travelled the predefined path, and/or
- a number of times the at least one vehicle has travelled any of the one or more positions, and/or
- a number of times a vehicle of a specific type has travelled the predefined path and/or,
- a number of times the at least one vehicle has performed a respective operation of one of the one or more operations.

In these examples, obtaining the at least one distance to use as an offset for at least one position of the configuration may be obtained by using the iteration number.

In this way, reduced wear of the predefined path is achieved as a position of where to perform operations affecting the longitudinal motion of the at least one vehicle is different for each iteration number. This is since the at least one distance to use as the offset for the at least one position may be obtained using the iteration number. For example, the at least one distance may be a function of the iteration number.

In some examples, adjusting the configuration for the at least one vehicle by offsetting the at least one position of the configuration based on the obtained at least one distance comprises adjusting the configuration for a first vehicle and for a second vehicle, thereby establishing a first adjusted configuration for the first vehicle and a second adjusted configuration for the second vehicle. In these examples, the first adjusted configuration and the second adjusted configuration differs in that at least one position of the one or more positions is offset by a different distance. In these examples, triggering the at least one vehicle to operate in the predefined path based on the adjusted configuration comprises triggering the first vehicle to operate in the predefined path based on the first adjusted configuration and triggering the second vehicle to operate in the predefined path based on the second adjusted configuration.

In this way, reduced wear of the predefined path is achieved since multiple vehicles will do their respective operations at least partly at different positions in the predefined path.

According to a third aspect of the invention, a vehicle comprising a processor device configured to perform the method of the second aspect of the invention is provided.

According to a fourth aspect of the invention a computer program product in accordance with appended claim 12 is provided.

According to a fifth aspect of the invention, a non-transitory computer-readable storage medium in accordance with appended claim 13 is provided.

Technical benefits of the third, fourth and fifth aspects may respectively correspond to the technical benefits of the first and/or second aspects.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a diagram illustrating at least one vehicle and a predefined path according to one example.
**FIG. 2** is another view of **FIG. 1****,** according to another example.
**FIG. 3** is a flow chart of an exemplary method according to one example.
**FIG. 4** is a diagram illustrating an example scenario according to exemplary embodiments herein.
**FIG. 5** is a diagram illustrating an example scenario according to exemplary embodiments herein.
**FIG. 6** is a diagram illustrating an example scenario according to exemplary embodiments herein.
**FIG. 7** is a schematic diagram of an exemplary computer system for implementing examples disclosed herein, according to one example.

### DETAILED DESCRIPTION

Aspects set forth below represent the necessary information to enable those skilled in the art to practice the disclosure.

Embodiments herein may relate to reducing wear on a predefined path.

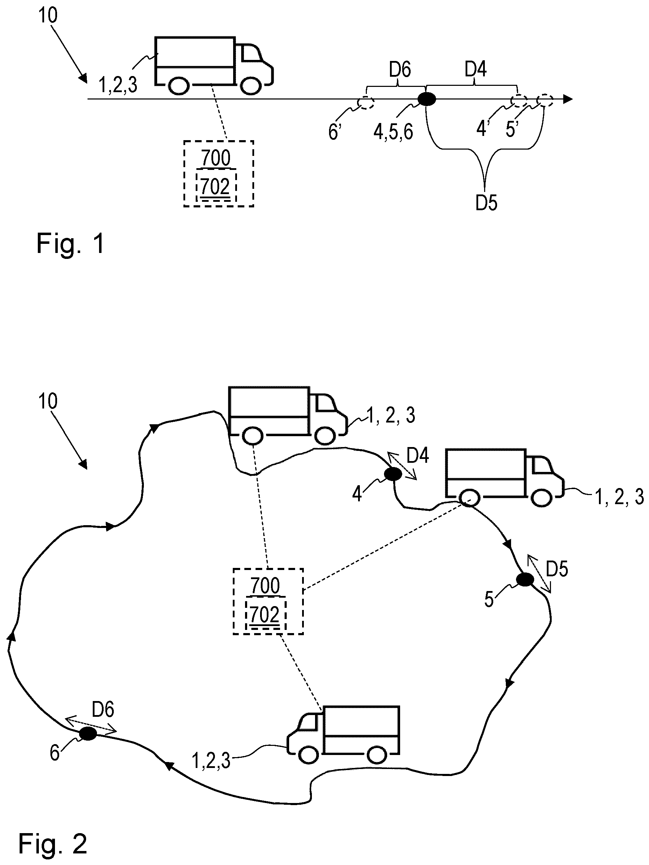

**FIG. 1** is an exemplary scenario of exemplary embodiments herein relates to a **at least one vehicle 1, 2, 3** travelling **a predefined path 10.**

The at least one vehicle 1, 2, 3 may comprise any one or more suitable vehicle, e.g., one or more of a car, bus, heavy-duty vehicle, wheel loader, truck, construction equipment, etc. The at least one vehicle 1, 2, 3 may be comprise any suitable ground engaging members for propelling the respective vehicle in a driving direction, e.g., wheels and/or crawler members.

The at least one vehicle 1, 2, 3, may comprise a single vehicle. In these exemplary embodiments the at least one vehicle 1, 2, 3 may be a **first vehicle 1.**

The at least one vehicle 1, 2, 3, may or multiple vehicles, e.g., any suitable number of vehicles. In these exemplary embodiments the at least one vehicle 1, 2, 3 may comprise the first vehicle 1, and additionally, **a second vehicle 2 and/or a third vehicle 3.**

The at least one vehicle 1, 2, 3, may comprise multiple vehicles of different types. The at least one vehicle 1, 2, 3, may comprise a truck not connected to a trailer, or it may comprise a truck connected to one or more trailers.

The predefined path 10 may be a path wherein the at least one vehicle 1, 2, 3 are arranged to travel and/or operate. Typically the at least one vehicle 1, 2, 3, is arranged to respectively perform one or more tasks in the predefined path 10, e.g., loading and/or unloading goods at certain positions in the predefined path 10. The predefined path 10 may have a set driving direction.

The predefined path 10 may comprise any suitable surface. For example, the surface may be prone to wear, e.g., when travelled across by a vehicle, e.g., the at least one vehicle 1, 2, 3. In a particular example, the drivable surface 10 may comprise any surface which is easily affected by loads applied by vehicles, e.g., soft surfaces, such as any one or more out of: sand, gravel, mud, dirt, snow, and/or a combination thereof.

The predefined path 10 may be a path planned for the at least one vehicle 1, 2, 3, to reach a destination or to perform a mission. The predefined path 10 may further be used by more vehicles than the at least one vehicles 1, 2, 3 (not illustrated in FIG. 1).

The predefined path 10 may be iterated multiple times. In other words, the predefined path 10 may be travelled multiple times subsequently by the at least one vehicle 1, 2, 3.

When the at least one vehicle 1, 2, 3 is travelling the predefined path 10 in the set driving direction, a longitudinal position of the at least one vehicle 1, 2, 3, may be increased during the travel. In other words, a longitudinal position in the predefined path 10 may be a position in the predefined path 10 along the driving direction of the predefined path 10. A difference in longitudinal position in the predefined path may be a distance between two different positions along the driving direction of the predefined path 10. An absolute longitudinal position in the predefined path 10 may be relative a defined reference point along the driving direction of the predefined path 10, e.g., a start position of the predefined path 10.

The at least one vehicle 1, 2, 3, may be arranged to travel the predefined path 10 according to a drive plan such that they are arranged to be at a respective longitudinal position of the predefined path 10 based on a time schedule.

The at least one vehicle 1, 2, 3, may comprise autonomous vehicles and/or at least partly autonomous vehicles. In other words, the at least one vehicle 1, 2, 3, may be arranged to travel the predefined path 10 at least partly without being directly controlled and/or steered by a user.

In exemplary embodiments herein, the predefined path 10 may comprise **one or more positions 4, 5, 6.** The one or more positions may be longitudinal positions along the driving direction of the predefined path 10. Each longitudinal position in the one or more positions 4, 5, 6, may be coupled with respective a corresponding operation to be performed in the respective position out of the one or more positions 4, 5, 6. The corresponding operation affects a longitudinal motion of the at least one vehicle 1, 2, 3, e.g., braking or accelerating the at least one vehicle 1, 2, 3.

Embodiments herein may relate to offsetting a longitudinal position of the one or more positions 4, 5, 6, of where the at least one vehicle 1, 2, 3 is scheduled according to a configuration e.g., a drive plan of the predefined path 10, to perform at least one operation which affects a longitudinal motion of the at least one vehicle 1, 2, 3. Offsetting the longitudinal position of the one or more positions 4, 5, 6, and thereby also where the corresponding respective operations are to be performed may be performed in any suitable manner, a few non-limiting examples follow below.

According to a first example, the at least one vehicle 1, 2, 3, travels the predefined path 10 and is according to a configuration, scheduled to perform a first operation affecting the first longitudinal motion of the at least one vehicle 1, 2, 3 at a **first longitudinal position 4.** To avoid exaggerated wear at the first longitudinal position 4, exemplary embodiments herein offsets the longitudinal position 4 of the configuration with a **first distance D-4.** This means that an adjusted configuration is established where the at least one vehicle 1, 2, 3 is instead, according to the adjusted configuration, triggered to perform the first operation affecting the first longitudinal motion of the at least one vehicle 1, 2, 3, at a **first adjusted position 4'.** The first adjusted position 4' is offset by the first distance D-4 from the first longitudinal position 4 in the driving direction of the predefined path 10. It shall be noted that the first operation may be performed in the future and/or have previously been performed, by the at least one vehicle 1, 2, 3 at the first longitudinal position 4, at a previous and/or at a future time. This means that triggering the at least one vehicle 1, 2, 3, to perform the first operation in the first adjusted position 4', distributes wear caused by said first operation in the predefined path 10. In particular, the wear is distributed in a longitudinal direction of the driving direction of the predefined path.

According to a second example, the at least one vehicle 1, 2, 3, according to the configuration, may be scheduled to perform a second operation affecting the second longitudinal motion of the at least one vehicle 1, 2, 3 at a **second longitudinal position 5.** The second longitudinal position 5 may be offset by a **second distance D-5** such that instead of performing the second operation at the second longitudinal position 5, the second operation will be triggered to be performed at a **second updated position 5'.** The second adjusted position 5' is offset by the second distance D-5 from the second longitudinal position 5 in the driving direction of the predefined path 10.

According to a third example, the at least one vehicle 1, 2, 3, according to the configuration, may further be scheduled to perform a third operation affecting the third longitudinal motion of the at least one vehicle 1, 2, 3 at a **third longitudinal position 6.** The third longitudinal position 6 may be offset by a **third distance D-6** such that instead of performing the third operation at the third longitudinal position 6, the third operation will be triggered to be performed at a **third updated position 6'.** The third adjusted position 6' is offset by the third distance D-6 from the third longitudinal position 6 in the driving direction of the predefined path 10.

In the above first, second, and third examples, the first second, and third longitudinal positions 4, 5, 6 may be the same or different longitudinal positions in the predefined path 10. In the above first, second, and third examples, the first second, and third operations may relate to the same or different operation, e.g., a braking or acceleration operation.

In some exemplary embodiments herein, the first, second and third example may be performed by the first vehicle 1 in the at least one vehicle 1, 2, 3, e.g., when the at least one vehicle is a single vehicle. The first second, and third longitudinal positions 4, 5, 6 may in these exemplary embodiments be respectively adjusted differently for each iteration of the first vehicle 1 travelling the predefined path 10. In other words, the first, second, and third distances D-4, D-5, D-6, and resulting first, second, and third updated positions 4', 5', 6', may all be different for each different iteration of the predefined path 10 for the first vehicle 1. The same may apply for the second vehicle 2 and/or the third vehicle 3, but with at least partly different first, second, and third distances D-4, D-5, D-6, and at least partly different resulting first, second, and third updated positions 4', 5', 6'

In some exemplary embodiments herein, the first, second and third example may be applicable to three different vehicles in the at least one vehicle 1, 2, 3, namely the first vehicle 1, the second vehicle 2, and the third vehicle 3 . In these exemplary embodiments, the first operation is triggered to be performed by the first vehicle 1 at the first updated position 4', the second operation is triggered to be performed by the second vehicle 2 at the second updated position 5', and the third operation is triggered to be performed by the third vehicle 3 at the third updated position 6'. In other words, each vehicle in the at least one vehicle 1, 2, 3 may at least partly have different offsets to the first, second, and third longitudinal positions 4, 5, 6, in the predefined path 10, causing each vehicle to perform operations affecting their longitudinal motions in the predefined path 10, at least partly at different updated positions 4', 5', 6'.

Embodiments herein may be performed at least partly by a **computer system 700,** and a **processor device 702** therein. The computer system 700 may be comprised in any one vehicle out of the at least one vehicle 1, 2, 3, or may be comprised at a remote location communicatively coupled to the at least one vehicle 1, 2, 3, e.g., in a server or control station e.g., which may be arranged to at least partly remotely control and/or to provide instructions, such as the respective longitudinal offset to the respective vehicle in the at least one vehicle 1,2,3.

The computer system 700 and/or the processor device 702 therein may be able to communicate with each respective vehicle in the at least one vehicle 1, 2, 3. The computer system 700 and/or the processor device 702 therein may further, directly or indirectly, control and/or communicate with, any suitable entity comprised in the at least one vehicle 1, 2, 3. The computer system 700 and/or the processor device 702 therein may further be able to trigger the at least one vehicle 1, 2, 3 to travel the predefined path 10 using an adjusted configuration indicating at least one offset to a longitudinal position in the predefined path 10, wherein the at least one vehicle 1, 2, 3, is configured to perform a respective operation affecting the longitudinal motion of the at least one vehicle 1, 2, 3, at said longitudinal position.

In other words, for some exemplary embodiments herein, the exemplary embodiments are performed in a static centralized entity, e.g., server or control station. As an alternative, some exemplary embodiments herein may be performed in each vehicle of the at least one vehicle 1, 2, 3 and/or in a lead vehicle in the at least one vehicle 1, 2, 3. The lead vehicle may communicate any suitable information with other vehicles of the at least one vehicle 1, 2, 3, e.g., any one or more out of respective offsets, configurations, longitudinal positions, and sensor data in the predefined path 10.

**FIG. 2** is another view of FIG. 1, according to another example.

FIG. 2 illustrates the computer system 700 comprising the processor device 702 configured to handle a configuration of the predefined path 10 for the at least one vehicle 1, 2, 3. The configuration is indicative of one or more positions 4, 5, 6 in the predefined path 10. For each of the one or more positions 4, 5, 6, the configuration indicates a respective operation to be performed at the respective position of the predefined path 10. Each respective operation affects a longitudinal motion of the at least one vehicle 1, 2, 3 when performing the operation.

The processor device 702 is further configured to obtain the configuration of the predefined path 10.

The processor device 702 is further configured to obtain the at least one distance D-4, D-5, D-6 for offsetting at least one position of the configuration,

The processor device 702 is further configured to, for the at least one vehicle 1, 2, 3, adjust the configuration by offsetting the at least one position of the configuration based on the obtained at least one distance D-4, D-5, D-6, and thereby establish an adjusted configuration for the at least one vehicle 1, 2, 3.

The processor device 702 is further configured to trigger the at least one vehicle 1, 2, 3 to operate in the predefined path 10 based on the adjusted configuration.

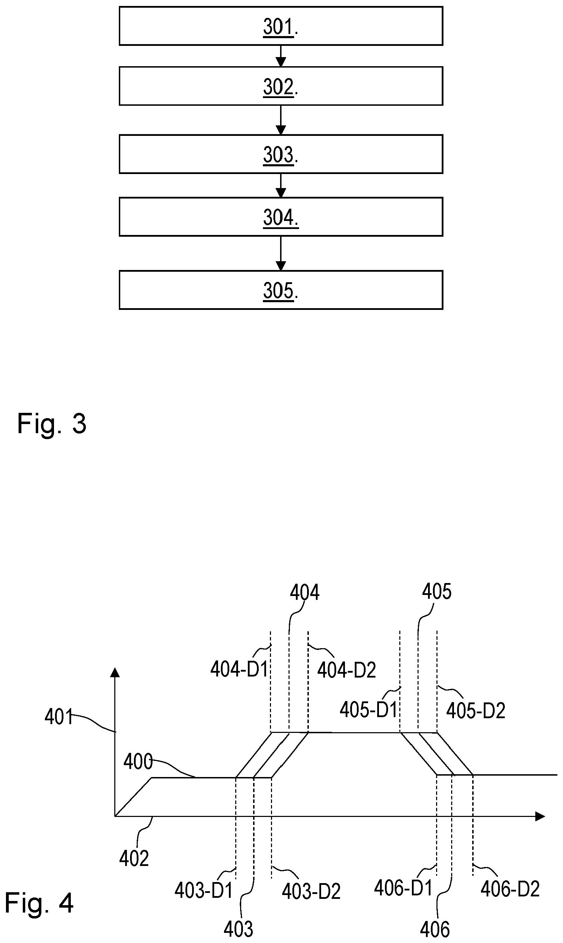

**FIG. 3** is a flow chart of an exemplary computer-implemented method for handling a configuration of a predefined path 10 for at least one vehicle 1, 2, 3. The configuration is indicative of one or more positions 4, 5, 6 in the predefined path 10. The one or more positions 4, 5, 6 may comprise or represent longitudinal positions in the driving direction of the predefined path.

For each of the one or more positions 4, 5, 6, the configuration indicates a respective operation to be performed at the respective position of the predefined path 10. Each respective operation affects a longitudinal motion of the at least one vehicle 1, 2, 3 when performing the operation.

The method may be performed by the computer system 700, in particular the processor device 702. The method comprises the following actions, which actions may be taken in any suitable order.

### Action 301.

The method comprises, by a processor device 702 of a computer system 700, obtaining the configuration of the predefined path 10.

The configuration may be predefined or may be established by obtaining operations performed by the at least one vehicle 1, 2, 3, and their corresponding longitudinal positions.

The configuration may be the same for all vehicles in the at least one vehicle 1, 2, 3. In other words, the configuration indicates operations which each vehicle in the at least one vehicle 1, 2, 3 is to perform at a respective longitudinal position.

The configuration may for example be a speed profile or a gear shift profile of where the at least one vehicle 1, 2, 3, shall shift gear and/or change speed.

In some exemplary embodiments, each respective operation of the configuration comprises any one or more out of:
- adjusting a speed and/or acceleration of the at least one vehicle 1, 2, 3,
- a halt/stop operation performed by the at least one vehicle 1, 2, 3,
- braking and/or decelerating the at least one vehicle 1, 2, 3, and
- shifting gear of the at least one vehicle 1, 2, 3.

Each of these operations respectively affects a longitudinal motion of the at least one vehicle and induces wear at the location they are performed, especially if they are performed at the same location by every vehicle in the at least one vehicle 1, 2, 3, and/or at every iteration of the predefined path 10 at the same location.

As one example, accelerating the at least one vehicle 1, 2, 3 requires an increase in positive torque which exerts an increased amount of load exerted to the ground surface where the acceleration is performed.

Additionally or alternatively, a respective gear of the at least one vehicle 1, 2, 3, may affect a load exerted to the ground surface when used by the at least one vehicle 1, 2, 3.

In some exemplary embodiments, the configuration comprises at least one pair of start and end operations such that a start operation is configured to be performed at a start position. In these exemplary embodiments, a corresponding end operation is configured to be performed at an end position. For example, the at least one pair of start and end operations comprises any one out of:
- a start operation to start braking the at least one vehicle 1, 2, 3 at the start position and an end braking operation to end braking the at least one vehicle 1, 2, 3 at the end position; and/or
- a start operation to start a speed and/or acceleration increase of the at least one vehicle 1, 2, 3 at the start position and an end operation to end the speed and/or acceleration increase of the at least one vehicle 1, 2, 3 at the end position.

### Action 302.

In some exemplary embodiments, the method comprises obtaining an iteration number, the iteration number being indicative of any one of:
- a number of times the at least one vehicle 1, 2, 3 has travelled the predefined path 10, and/or
- a number of times the at least one vehicle 1, 2, 3 has travelled any of the one or more positions, e.g., longitudinal positions, and/or
- a number of times the at least one vehicle 1, 2, 3 has performed a respective operation of one of the one or more operations.

In this way, it may be possible to track which iteration the at least one vehicle 1, 2, 3, is operating travelling the predefined path 10, the positions therein, and/or an iteration of performing the operations therein. The iteration number may be for all vehicles in the at least one vehicle 1, 2, 3, and/or different for each vehicle in the at least one vehicle 1, 2, 3,.

### Action 303.

The method comprises, by the processor device 702, obtaining at least one distance D-4, D-5, D-6 to use as an offset for at least one position of the configuration.

In some exemplary embodiments, obtaining the at least one distance D-4, D-5, D-6 to use as an offset for the at least one position of the configuration comprises any one or more out of:
- obtaining at least one predefined distance, and/or
- obtaining at least one distance D-4, D-5, D-6 based on a number generation from a random number generator and/or a pseudo-random number generator.

The random number generator and/or the pseudo-random number generator may be any suitable number generator which can generate a number sequence, e.g., comprising the at least one distance, wherein the generated number sequence comprises any suitable numbers distributed over an interval.

The predefined distance may be different between at least two vehicles in the at least one vehicle 1, 2, 3.

For example, the predefined distance may be the same for each type of vehicle in the at least one vehicle 1, 2, 3, and wherein the at least one vehicle comprises at least two vehicles of different types.

In some exemplary embodiments, the predefined distance may be different for all vehicles in the at least one vehicle. 1, 2, 3

In some exemplary embodiments, the predefined distance may be based on a unique identifier for each vehicle in the at least one vehicle 1, 2, 3.

In some exemplary embodiments, obtaining the at least one distance D-4, D-5, D-6 to use as an offset for at least one position of the configuration is obtained by using the iteration number, e.g., as obtained in action 302. In other words, the at least one distance may be different for each iteration of the predefined path, e.g., and for each vehicle in the at least one vehicle 1, 2, 3.

In some exemplary embodiments, obtaining the at least one distance D-4, D-5, D-6 to use as an offset for the at least one position of the configuration further comprises obtaining at least one condition of the predefined path 10, and determining the at least one distance D-4, D-5, D-6 based on the obtained at least one condition. In these exemplary embodiments, the at least one condition of the predefined path 10 may pertain to any one or more out of:
- a driving condition of at least one part of the predefined path 10,
- a safety condition of at least one part of the predefined path 10,
- activities and/or events occurring in at least one part of the predefined path 10,
- obstacles in at least one part of the predefined path 10,
- at least one other vehicle in at least one part of the predefined path 10, and
- human actors and/or animals in at least one part of the predefined path 10.

Determining the at least one distance D-4, D-5, D-6 based on the at least one condition, may comprise obtaining a longitudinal position of the at least one condition, and determining the at least one distance D-4, D-5, D-6 such that an adjusted configuration using the at least one distance D-4, D-5, D-6 as an offset shall not indicate to perform an operation at the longitudinal position of the at least one condition. The longitudinal position of the at least one condition may be a longitudinal position in the driving direction of the predefined path 10.

In some exemplary embodiments, obtaining the at least one distance D-4, D-5, D-6 to use as an offset for the at least one position of the configuration further comprises obtaining, for each type of vehicle in the at least one vehicle 1, 2, 3, at least one type-dependent distance.

Type as used herein may be any variation of model, size, dimension or use-case of vehicle in the at least one vehicle 1, 2, 3.

Different types of vehicles in the at least one vehicle 1, 2, 3 may affect wear of the predefined path 10 differently when travelling in the predefined path 10 and/or when performing operations affecting their respective longitudinal motion.

For example, a first type of vehicle in the at least one vehicle 1, 2, 3 may have a first weight or have a first range of weight.

For example, a second type of vehicle in the at least one vehicle 1, 2, 3 may have a second weight or a second range of weight. The second weight or the second range of weight may be at least partly different from the first weight or the first range of weight. In other words, on average, the second type of vehicle may be expected to be of a different weight than the first type of vehicle, and therefore the first and/second type of vehicle in the at least one vehicle 1, 2, 3 would affect the wear of the predefined path 10 differently when performing the operations affecting their respective longitudinal motion. Therefore, adjusting the longitudinal motion differently for the first type of vehicle and the second type of vehicle may significantly reduce the wear in the predefined path 10.

The first and second types of vehicles may for example be any one or more out of: different types of trucks, dumper trucks, wheel loaders, construction equipment, TA15, service vehicles, etc.

In some exemplary embodiments, obtaining, for each type of vehicle in the at least one vehicle 1, 2, 3, the at least one type-dependent distance comprises, based on the respective type of vehicle, obtaining an interval comprising a maximum distance and a minimum distance for the respective type of vehicle, and obtaining the at least one type-dependent distance based on determining the at least one type-dependent distance from the obtained interval based on a number generated from a random number generator and/or a pseudo-random number generator.

The random number generator and/or the pseudo-random number generator may be any suitable number generator which can generate a number sequence comprising the random number, and wherein the generated number sequence comprises any suitable numbers distributed over an interval, e.g., the obtained interval.

In other words, for each vehicle of each type of vehicle, the type-dependent distance may be determined to be randomized, or pseudo-randomized to be within the obtained interval.

### Action 304.

The method comprises, by the processor device 702, for the at least one vehicle 1, 2, 3, adjusting the configuration by offsetting the at least one position of the configuration based on the obtained at least one distance D-4, D-5, D-6, thereby establishing an adjusted configuration for the at least one vehicle 1, 2, 3.

The at least one position of the configuration may be any of the one or more positions 4, 5, 6, wherein one or more corresponding operations affecting the longitudinal motion of the at least one vehicle 1, 2, 3 is to be performed.

Offsetting the at least one position of the configuration based on the obtained at least one distance D-4, D-5, D-6, may comprise using the respective at least one distance D-4, D-5, D-6, as an offset to the at least one position. The offset may be positive or negative, e.g., such that the at least one position is respectively moved earlier or later in the driving direction of the predefined path 10. For example, the at least one distance D-4, D-5, D-6 may respectively be a positive or negative value.

In other words, offsetting the at least one position of the configuration based on the obtained at least one distance D-4, D-5, D-6 may comprise adding the at least one position of the configuration, and the at least one distance D-4, D-5, D-6, resulting in an at least one updated position. The operation to be performed at the at least one position of the configuration may then instead, according to the adjusted configuration, be offset to be performed by the at least one vehicle 1, 2, 3, at the updated position.

In some exemplary embodiments, adjusting the configuration for the at least one vehicle 1, 2, 3 by offsetting the at least one position of the configuration based on the obtained at least one distance D-4, D-5, D-6 comprises adjusting the configuration for the first vehicle 1 and for the second vehicle 2, thereby establishing a first adjusted configuration for the first vehicle 1 and a second adjusted configuration for the second vehicle 2. The first adjusted configuration and the second adjusted configuration may differ in that at least one position of the one or more positions, e.g., longitudinal positions, is offset by a different distance in the different configurations. In other words, different vehicles in the at least one vehicle 1, 2, 3, may establish different adjusted configurations such that they are to perform at least one matching operation at different longitudinal positions in the driving direction of the predefined path 10.

In some exemplary embodiments, adjusting the configuration comprises offsetting the start position and/or the end position, e.g., as obtained part of the configuration in action 301. The start and end positions may be adjusted independently or collectively as a pair with the same offset.

In some exemplary embodiments, adjusting the configuration comprises adjusting the configuration by offsetting the at least one position of the configuration based on the obtained at least one type-dependent distance, e.g., as obtained in action 303.

### Action 305.

The method comprises, by the processor device 702, triggering the at least one vehicle 1, 2, 3 to operate in the predefined path 10 based on the adjusted configuration.

For example, the first vehicle 1 of the at least one vehicle 1, 2, 3 may be triggered to perform one or more operations at different one or more longitudinal positions than what is indicated by the configuration, e.g., as obtained in action 301.

In some exemplary embodiments, triggering the at least one vehicle 1, 2, 3 to operate in the predefined path 10 based on the adjusted configuration comprises triggering the first vehicle 1 to operate in the predefined path 10 based on the first adjusted configuration and triggering the second vehicle 2 to operate in the predefined path 10 based on the second adjusted configuration, e.g., as established in action 304.

In other words, the first vehicle 1 and the second vehicle 2 of the at least one vehicle 1, 2, 3 may be triggered to perform the same operation at two different longitudinal positions in the driving direction of the predefined path 10.

Triggering the at least one vehicle 1, 2, 3 to operate in the predefined path 10 based on the adjusted configuration may comprise sending one or more offsets to the at least one vehicle 1, 2, 3, e.g., corresponding to one or more upcoming operations for the at least one vehicle 1, 2, 3.

Triggering the at least one vehicle 1, 2, 3 to operate in the predefined path 10 based on the adjusted configuration may instruct the at least one vehicle 1, 2, 3 to use the indicated offsets of the adjusted configuration. Alternatively, the at least one vehicle 1, 2, 3, may internally, e.g., as part of action 305, determine a resulting offset for a longitudinal position 4, 5, 6, based on the offset indicated by the adjusted configuration. The resulting offset may further be based on sensor data of the at least one vehicle 1, 2, 3.

**FIG. 4** is a diagram illustrating an example diagram illustrating exemplary embodiments herein.

In the examples of FIG. 4., **a line 400** indicates a speed for the at least one vehicle 1, 2, 3, for a given position. The **Y-axis 401** indicates speed for the at least one vehicle 1, 2, 3 and the X-**axis 402** indicates a longitudinal position in the driving direction of the predefined path 10 for the at least one vehicle 1, 2, 3.

At a **first longitudinal position 403,** a first operation is scheduled in the configuration, e.g., as obtained in action 301, to be performed. The operation pertains to trigger the at least one vehicle 1, 2, 3, to increase a speed of the at least one vehicle 1, 2, 3. In some exemplary embodiments herein, the first longitudinal position 403 may be offset with an offset that lies within an interval defined by a **first minimum distance 403-D1** and **a first maximum distance 403-D2,** e.g., as in action 304. The interval may be defined based on determining a largest distance for the at least one vehicle 1, 2, 3, to use as an offset and still be able to perform an assigned task or mission.

At a **second longitudinal position 404,** a second operation is scheduled in the configuration, e.g., as obtained in action 301, to be performed. The operation pertains to trigger the at least one vehicle 1, 2, 3, to stop increase the speed of the at least one vehicle 1, 2, 3. In some exemplary embodiments herein, the second longitudinal position 404 may be offset with an offset that lies within an interval defined by **a second minimum distance 404-D1** and **a second maximum distance 404-D2,** e.g., as in action 304.. The interval may be defined based on determining a largest distance for the at least one vehicle 1, 2, 3, to use as an offset and still be able to perform an assigned task or mission.

At a **third longitudinal position 405,** a third operation is scheduled in the configuration, e.g., as obtained in action 301, to be performed. The operation pertains to trigger the at least one vehicle 1, 2, 3, to start decelerating, i.e., braking the at least one vehicle 1, 2, 3. In some exemplary embodiments herein, the third longitudinal position 405 may be offset with an offset that lies within an interval defined by **a third minimum distance 405-D1** and **a third maximum distance 405-D2,** e.g., as in action 304. The interval may be defined based on determining a largest distance for the at least one vehicle 1, 2, 3, to use as an offset and still be able to perform an assigned task or mission.

At a **fourth longitudinal position 406,** a fourth operation is scheduled in the configuration, e.g., as obtained in action 301, to be performed. The operation pertains to trigger the at least one vehicle 1, 2, 3, to stop decelerating, i.e., braking the at least one vehicle 1, 2, 3. In some exemplary embodiments herein, the fourth longitudinal position 406 may be offset with an offset that lies within an interval defined by **a fourth minimum distance 406-D1** and **a fourth maximum distance 406-D2,** e.g., as in action 304. The interval may be defined based on determining a largest distance for the at least one vehicle 1, 2, 3, to use as an offset and still be able to perform an assigned task or mission.

Hence, the adjusted configuration may be established, e.g., as in action 304, such that:
- the first longitudinal position 403 is adjusted to be offset based on a distance within the interval of the first minimum distance 403-D1 and the first maximum distance 403-D2.
- the second longitudinal position 404 is adjusted to be offset based on a distance within the interval of the second minimum distance 404-D1 and the second maximum distance 404-D2.
- the third longitudinal position 405 is adjusted to be offset based on a distance within the interval of the third minimum distance 405-D1 and the third maximum distance 405-D2.
- the fourth longitudinal position 406 is adjusted to be offset based on a distance within the interval of the fourth minimum distance 406-D1 and the fourth maximum distance 406-D2.

The at least one vehicle 1, 2, 3, may then be triggered to travel the predefined path 10 using the adjusted configuration, e.g., such that the speed adjusting operations is performed at different operations within the intervals.

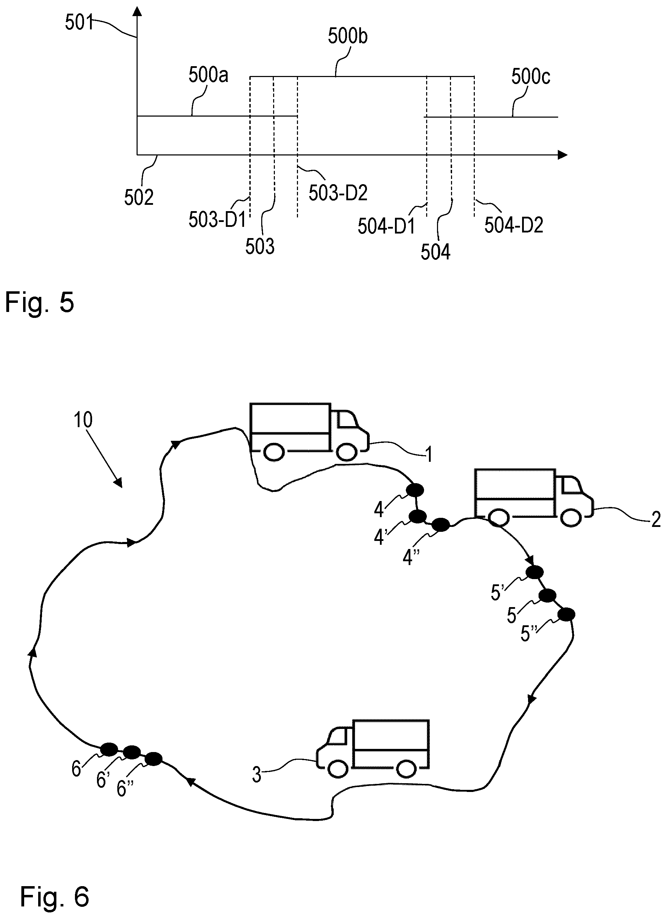

**FIG. 5** is a diagram illustrating an example scenario according to exemplary embodiments herein.

In the examples of FIG. 5., **lines 500a-c** indicates a gear for the at least one vehicle 1, 2, 3, for a given position. The **Y-axis 501** indicates a gear for the at least one vehicle 1, 2, 3 and the X-**axis 502** indicates a longitudinal position in the driving direction of the predefined path 10 for the at least one vehicle 1, 2, 3.

At a **first longitudinal gear position 503,** a first operation is scheduled in the configuration, e.g., as obtained in action 301, to be performed. The operation pertains to trigger the at least one vehicle 1, 2, 3, to perform a gear shift of the at least one vehicle 1, 2, 3. The gear shift increases wear on the predefined path 10 e.g., as the increased gear shift result in a specific torque pattern that in turn will create wear. This is true for machines with a converter but even more so for vehicles, e.g., trucks, with clutch-based transmissions, i.e. as then the vehicles need to ramp down torque and then ramp up again in order to change gear. Furthermore, when a lower gear is used, a torque may be increased, which causes a wheel of the at least one vehicle 1, 2, 3, to have an increased wheel slip and/or that the wheel of the at least one vehicle 1, 2, 3, digs at least partly down into the surface of the predefined path 10.

In some exemplary embodiments herein, the first longitudinal gear position 503 may be offset with an offset that lies within an interval defined by **a first minimum gear distance 503-D1** and **a first maximum gear distance 503-D2.** The interval may be defined based on determining a largest distance for the at least one vehicle 1, 2, 3, to use as an offset and still be able to perform an assigned task or mission.

At a **second longitudinal gear position 504,** a second operation is scheduled in the configuration, e.g., as obtained in action 301, to be performed. The second operation pertains to trigger the at least one vehicle 1, 2, 3, to perform a second gear shift of the at least one vehicle 1, 2, 3. The gear shift increases wear on the predefined path 10 e.g., as discussed above.

In some exemplary embodiments herein, the second longitudinal gear position 504 may be offset with an offset that lies within an interval defined by **a second minimum gear distance 504-D1** and **a second maximum gear distance 504-D2.** The interval may be defined based on determining a largest distance for the at least one vehicle 1, 2, 3, to use as an offset and still be able to perform an assigned task or mission.

Hence, the adjusted configuration may be established, e.g., as in action 304, such that:
- the first longitudinal gear position 503 is adjusted to be offset based on a distance within the interval of the first minimum gear distance 403-D1 and the first maximum gear distance 403-D2.
- the second longitudinal gear position 504 is adjusted to be offset based on a distance within the interval of the second minimum gear distance 404-D1 and the second maximum gear distance 404-D2.

The at least one vehicle 1, 2, 3, may then be triggered to travel the predefined path 10 using the adjusted configuration, e.g., such that the gear shift operations are performed at different operations within the intervals.

**FIG. 6** is a diagram illustrating an example scenario according to exemplary embodiments herein. In the example scenario of FIG. 6, the at least one vehicle 1, 2, 3 comprises the first vehicle 1, the second vehicle 2, and the third vehicle 3.

In the example scenario of FIG. 6, the first vehicle 1, the second vehicle 2, and the third vehicle 3 iterates travelling the predefined path 10, such that for each iteration, the vehicles 1, 2, 3 respective offset to longitudinal positions of the configuration is at least partly different for each iteration, e.g., based on the iteration number obtained in action 302.

In the example scenario of FIG. 6, in the configuration, the first vehicle 1 is to perform a first operation at the first longitudinal position 4. For a first iteration of the predefined path 10, according to the adjusted configuration, the first operation is offset to be performed by the first vehicle 1 at a **first iteration position 4'.** For a second iteration of the predefined path 10, according to the adjusted configuration, the first operation is offset to be performed by the first vehicle 1 at a **second iteration position 4'.**

In the example scenario of FIG. 6, in the configuration, according to the adjusted configuration, the second vehicle 2 is to perform a second operation at the second longitudinal position 5. For a first iteration of the predefined path 10, the second operation is offset to be performed by the second vehicle 2 at a **first iteration position 5'.** For a second iteration of the predefined path 10, according to the adjusted configuration, the second operation is offset to be performed by the second vehicle 2 at a **second iteration position 5'.**

In the example scenario of FIG. 6, in the configuration, the third vehicle 3 is to perform a third operation at the third longitudinal position 6. For a first iteration of the predefined path 10, according to the adjusted configuration, the third operation is offset to be performed by the third vehicle 3 at a **first iteration position 6'.** For a second iteration of the predefined path 10, according to the adjusted configuration, the third operation is offset to be performed by the third vehicle 3 at a **third iteration position 6'.**

### Variations and other exemplary embodiments

In some exemplary embodiments herein, the configuration and adjusted configuration, e.g., as in actions 301, 304, may be a speed profile. The speed profile is set based on the predefined path 10. In some exemplary embodiments, the predefined path 10 may be divided into a set of segments. In these exemplary embodiments, each segment represents a set speed or a set acceleration/braking profile.

The speed profile may indicate a speed for the at least one vehicle 1, 2, 3, to travel for each respective segment in the set of segments.

The speed profile may in these exemplary embodiments be adapted to the driving conditions of each respective segment in the set of segments, e.g., based on a slope and/or a curvature of the respective segment.

The longitudinal positions of exemplary embodiments herein may be at the start of each respective segment. Alternatively, the speed profile may be traction or gear profile.

For some exemplary embodiments herein, the speed profiles and/or the longitudinal offsets of the configuration, e.g., as obtained in action 301, is not necessarily statically bound but may be established while the at least one vehicle 1, 2, 3 travels in the predefined path 10.

For example, exemplary embodiments herein may use any one or more of the following to establish the configuration, e.g. a speed profile, e.g., as part of obtaining the configuration in action 301:
- One or more driving conditions in the predefined path 10, e.g., any one or more out of a slope, road quality, change of speed limit;
- a safety situation of the predefined path 10, , e.g., any one or more out of a narrow road, bridge, curvature; and
- one or more activities & events in the predefined path 10, e.g., any one or more out of stopping, turning, loading, reward driving to loading position, object detection etc.

For example, it may be detected that the at least one vehicle 1, 2, 3, performs a speed increase operation at a first longitudinal position of the predefined path 10, and that the at least one vehicle performs a speed decrease operation at a second longitudinal position in the predefined path 10. These operations may then be adjusted, e.g., as in actions 301-305 above.

The above data being obtained either as preset or historical data or detected by onboard sensor systems of the at least one vehicle 1, 2, 3. Historical data may include either data originating from one or more vehicles in the at least one vehicle 1, 2, 3, or data from a whole fleet, e.g., all vehicles in the at least one vehicle 1, 2, 3.

A method for setting an offset for a vehicle in the at least one vehicle 1, 2, 3, at a given location and time may comprise:
- receiving an upcoming request from the at least one vehicle 1, 2, 3,
- classify an urgency of the request, each urgency class may include an offset threshold, time gap or distance for when the upcoming request must be done. Some driving situations may allow for a large offset while other a small offset or zero offset, e.g. a safety-critical driving situation.

The offset may either be randomly set within the offset threshold, or the offset may be selected to cause a distributed speed profile history of a specific location within the threshold offset, e.g., with accordance to obtained historical data of the specific location.

In some exemplary embodiments herein, offsets may be determined and/or controlled by an external control unit, e.g., as part of the computer system 700 and/or as part of an external system communicatively coupled with the computer system 700.

The external control unit may activate and controls the offsets, e.g., to perform the actions 301-304.

External control unit may request an offset, and trigger the at least one vehicle 1, 2, 3, to use said offset, e.g., as in action 305. However, the at least one vehicle 1, 2, 3, may internally determine an offset to be used based on the offset provided by the external control unit.

Each vehicle in the at least one vehicle 1, 2, 3, may internally determine the offset based on either own data, e.g., internal sensor data and/or when the processor device 702 is part of the at least one vehicle, and/or based on external data, e.g., the offset may be transmitted by the external control unit to the at least one vehicle 1, 2, 3.

Each vehicle in the at least one vehicle 1, 2, 3, may further internally determine the offset based on onboard sensor data, e.g., comprising first vibration sensor data and/or surface first roughness sensor data, and/or based on information from vehicle ahead, e.g., comprising first vibration sensor data and/or surface first roughness sensor data of the vehicle ahead.

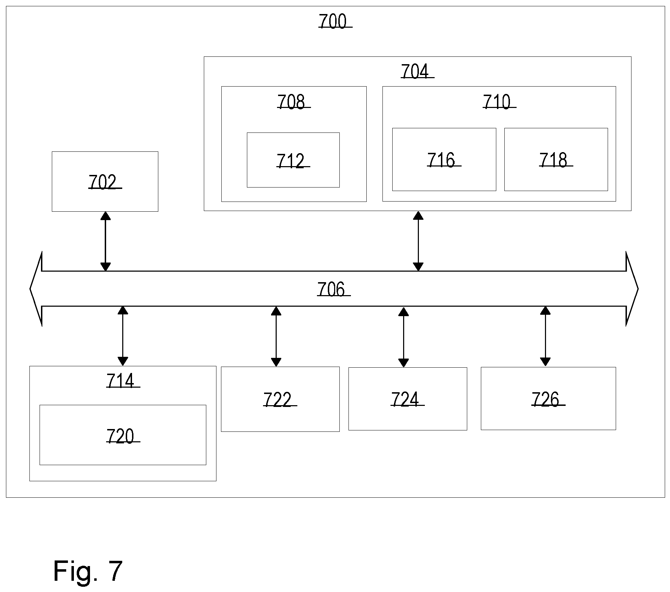

FIG. 7 is a schematic diagram of a computer system 700 for implementing examples disclosed herein. The computer system 700 is adapted to execute instructions from a computer-readable medium to perform these and/or any of the functions or processing described herein. The computer system 700 may be connected (e.g., networked) to other machines in a LAN, an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include a processor device 702 (may also be referred to as a control unit), a memory 704, and a system bus 706. The computer system 700 may include at least one computing device having the processor device 702. The system bus 706 provides an interface for system components including, but not limited to, the memory 704 and the processor device 702. The processor device 702 may include any number of hardware components for conducting data or signal processing or for executing computer code stored in memory 704. The processor device 702 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processor device 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with a processor device 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program product 720 stored on a transitory or non-transitory computer-usable or computer-readable storage medium (e.g., single medium or multiple media), such as the storage device 714, which includes complex programming instructions (e.g., complex computer-readable program code) to cause the processor device 702 to carry out the steps described herein. Thus, the computer-readable program code can comprise software instructions for implementing the functionality of the examples described herein when executed by the processor device 702. The processor device 702 may serve as a controller or control system for the computer system 700 that is to implement the functionality described herein.

The computer system 700 also may include an input device interface 722 (e.g., input device interface and/or output device interface). The input device interface 722 may be configured to receive input and selections to be communicated to the computer system 700 when executing instructions, such as from a keyboard, mouse, touch-sensitive surface, etc. Such input devices may be connected to the processor device 702 through the input device interface 722 coupled to the system bus 706 but can be connected through other interfaces such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may also include a communications interface 726 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

Directions as used herein, e.g. horizontal, vertical, lateral, longitudinal may relate to when a vehicle is standing on flat ground.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

## Claims

1. A computer system (700) comprising a processor device (702) configured to handle a configuration of a predefined path (10) for at least one vehicle (1, 2, 3), the configuration being indicative of one or more positions (4, 5, 6) in the predefined path (10), and for each of the one or more positions (4, 5, 6), the configuration indicates a respective operation to be performed at the respective position of the predefined path (10), each respective operation affecting a longitudinal motion of the at least one vehicle (1, 2, 3) when performing the operation, the processor device (702) is further configured to:
obtain the configuration of the predefined path (10),
obtain at least one distance (D-4, D-5, D-6) for offsetting at least one position of the configuration, wherein obtaining (303) the at least one distance (D-4, D-5, D-6) to use as an offset for the at least one position of the configuration further comprises obtaining, for each type of vehicle in the at least one vehicle (1, 2, 3), at least one type-dependent distance,
for the at least one vehicle (1, 2, 3), adjust the configuration by offsetting the at least one position of the configuration based on the obtained at least one distance (D-4, D-5, D-6), thereby establishing an adjusted configuration for the at least one vehicle (1, 2, 3), wherein adjusting the configuration comprises adjusting the configuration by offsetting the at least one position of the configuration based on the obtained at least one type-dependent distance, and
trigger the at least one vehicle (1, 2, 3) to operate in the predefined path (10) based on the adjusted configuration, and
**characterized in that** the offset is applied in the longitudinal direction of the predefined path (10) so as to modify the position along the predefined path (10) at which the respective operation affecting longitudinal motion is performed, such that the operation is performed at different longitudinal positions for different vehicles and/or different traversals of the predefined path (10).

2. A computer-implemented method for handling a configuration of a predefined path (10) for at least one vehicle (1, 2, 3), the configuration being indicative of one or more positions (4, 5, 6) in the predefined path (10), and for each of the one or more positions (4, 5, 6), the configuration indicates a respective operation to be performed at the respective position of the predefined path (10), each respective operation affecting a longitudinal motion of the at least one vehicle (1, 2, 3) when performing the operation, the method comprising:
by a processor device (702) of a computer system (700), obtaining (301) the configuration of the predefined path (10), and
by the processor device (702), obtaining (303) at least one distance (D-4, D-5, D-6) to use as an offset for at least one position of the configuration, wherein obtaining (303) the at least one distance (D-4, D-5, D-6) to use as an offset for the at least one position of the configuration further comprises obtaining, for each type of vehicle in the at least one vehicle (1, 2, 3), at least one type-dependent distance,
by the processor device (702), for the at least one vehicle (1, 2, 3), adjusting (304) the configuration by offsetting the at least one position of the configuration based on the obtained at least one distance (D-4, D-5, D-6), thereby establishing an adjusted configuration for the at least one vehicle (1, 2, 3), wherein adjusting the configuration comprises adjusting the configuration by offsetting the at least one position of the configuration based on the obtained at least one type-dependent distance, and
by the processor device (702), triggering (305) the at least one vehicle (1, 2, 3) to operate in the predefined path (10) based on the adjusted configuration, and
**characterized in that** the offset is applied in the longitudinal direction of the predefined path (10) so as to modify the position along the predefined path (10) at which the respective operation affecting longitudinal motion is performed, such that the operation is performed at different longitudinal positions for different vehicles and/or different traversals of the predefined path (10).

3. The method of claim 2 wherein each respective operation of the configuration comprises any one or more out of:
adjusting a speed and/or acceleration of the at least one vehicle (1, 2, 3),
halt operation performed by the at least one vehicle (1, 2, 3),
braking and/or decelerating the at least one vehicle (1, 2, 3), and
shifting gear of the at least one vehicle (1, 2, 3).

4. The method of any one of claims 2-3 wherein the configuration comprises at least one pair of start and end operations such that a start operation is configured to be performed at a start position and a corresponding end operation is configured to be performed at an end position, and wherein adjusting the configuration comprises offsetting the start position and/or the end position.

5. The method of claim 4 wherein the at least one pair of start and end operations comprises any one out of:
a start operation to start braking the at least one vehicle (1, 2, 3) at the start position and an end braking operation to end braking the at least one vehicle (1, 2, 3) at the end position; and/or
a start operation to start a speed and/or acceleration increase of the at least one vehicle (1, 2, 3) at the start position and an end operation to end the speed and/or acceleration increase of the at least one vehicle (1, 2, 3) at the end position.

6. The method of any one of claims 2-5, wherein obtaining (303) the at least one distance (D-4, D-5, D-6) to use as an offset for the at least one position of the configuration comprises any one or more out of:
obtaining at least one predefined distance, and/or
obtaining at least one distance (D-4, D-5, D-6) based on a number generation from a random number generator and/or a pseudo-random number generator.

7. The method of any one of claims 2-6, wherein obtaining (303) the at least one distance (D-4, D-5, D-6) to use as an offset for the at least one position of the configuration further comprises obtaining at least one condition of the predefined path (10), and determining the at least one distance (D-4, D-5, D-6) based on the obtained at least one condition, wherein the at least one condition of the predefined path (10) pertains to any one or more out of:
- obstacles in at least one part of the predefined path (10),
- at least one other vehicle in at least one part of the predefined path (10), and
- human actors and/or animals in at least one part of the predefined path (10).

8. The method of any of claims 2-7, wherein obtaining, for each type of vehicle in the at least one vehicle (1, 2, 3), the at least one type-dependent distance comprises:
based on the respective type of vehicle, obtaining an interval comprising a maximum distance and a minimum distance for the respective type of vehicle, and
obtaining the at least one type-dependent distance based on determining the at least one type-dependent distance from the obtained interval based on a number generated from a random number generator and/or a pseudo-random number generator.

9. The method of any one of claims 2-8, further comprising obtaining (302) an iteration number, the iteration number being indicative of any one of:
a number of times the at least one vehicle (1, 2, 3) has travelled the predefined path (10), and/or
a number of times the at least one vehicle (1, 2, 3) has travelled any of the one or more positions, and/or
a number of times the at least one vehicle (1, 2, 3) has performed a respective operation of one of the one or more operations; and
wherein obtaining the at least one distance (D-4, D-5, D-6) to use as an offset for at least one position of the configuration is obtained by using the iteration number.

10. The method of any one of claims 2-9, wherein adjusting (304) the configuration for the at least one vehicle (1, 2, 3) by offsetting the at least one position of the configuration based on the obtained at least one distance (D-4, D-5, D-6) comprises:
adjusting the configuration for a first vehicle (1) and for a second vehicle (2), thereby establishing a first adjusted configuration for the first vehicle and a second adjusted configuration for the second vehicle, the first adjusted configuration and the second adjusted configuration differing in that at least one position of the one or more positions is offset by a different distance, and
wherein triggering the at least one vehicle (1, 2, 3) to operate in the predefined path (10) based on the adjusted configuration comprises triggering the first vehicle (1) to operate in the predefined path (10) based on the first adjusted configuration and triggering the second vehicle (2) to operate in the predefined path (10) based on the second adjusted configuration.

11. A vehicle (1, 2, 3) comprising a processor device (702) configured to perform the method of any of claims 2-10.

12. A computer program product comprising program code for performing, when executed by a processor device (702), the method of any of claims 2-10.

13. A non-transitory computer-readable storage medium comprising instructions, which when executed by a processor device (702), cause the processor device (702) to perform the method of any of claims 2-10.

## Patentansprüche

1. Computersystem (700), umfassend eine Prozessorvorrichtung (702), die konfiguriert ist, um eine Konfiguration eines vorgegebenen Pfads (10) für mindestens ein Fahrzeug (1, 2, 3) zu handhaben, wobei die Konfiguration eine oder mehrere Positionen (4, 5, 6) in dem vorgegebenen Pfad (10) angibt, und für jede der einen oder der mehreren Positionen (4, 5, 6) die Konfiguration einen jeweiligen Vorgang angibt, die an der jeweiligen Position des vorgegebenen Pfads (10) durchzuführen ist, wobei jeder jeweilige Vorgang eine Längsbewegung des mindestens einen Fahrzeugs (1, 2, 3) beeinflusst, wenn der Vorgang durchgeführt wird, wobei die Prozessorvorrichtung (702) ferner konfiguriert ist zum:
Erhalten der Konfiguration des vorgegebenen Pfads (10),
Erhalten mindestens eines Abstands (D-4, D-5, D-6) zum Versetzen mindestens einer Position der Konfiguration, wobei das Erhalten (303) des mindestens einen Abstands (D-4, D-5, D-6), um ihn als einen Versatz für die mindestens eine Position der Konfiguration zu verwenden, ferner das Erhalten, für jeden Fahrzeugtyp in dem mindestens einen Fahrzeug (1, 2, 3), mindestens eines typabhängigen Abstands umfasst,
für das mindestens eine Fahrzeug (1, 2, 3), Anpassen der Konfiguration durch Versetzen der mindestens einen Position der Konfiguration basierend auf dem erhaltenen mindestens einen Abstand (D-4, D-5, D-6), wodurch eine angepasste Konfiguration für das mindestens eine Fahrzeug (1, 2, 3) festgelegt wird, wobei das Anpassen der Konfiguration das Anpassen der Konfiguration durch Versetzen der mindestens einen Position der Konfiguration basierend auf dem erhaltenen mindestens einen typabhängigen Abstand umfasst, und
Initiieren des mindestens einen Fahrzeugs (1, 2, 3), basierend auf der angepassten Konfiguration in dem vorgegebenen Pfad (10) zu fahren, und
**dadurch gekennzeichnet, dass** der Versatz in der Längsrichtung des vorgegebenen Pfads (10) angewendet wird, um die Position entlang des vorgegebenen Pfads (10) zu ändern, an der der jeweilige Vorgang, der die Längsbewegung beeinflusst, derart durchgeführt wird, dass der Vorgang an unterschiedlichen Längspositionen für unterschiedliche Fahrzeuge und/oder unterschiedliche Durchfahrten des vorgegebenen Pfads (10) durchgeführt wird.

2. Computerimplementiertes Verfahren zum Handhaben einer Konfiguration eines vorgegebenen Pfads (10) für mindestens ein Fahrzeug (1, 2, 3), wobei die Konfiguration eine oder mehrere Positionen (4, 5, 6) in dem vorgegebenen Pfad (10) angibt, und für jede der einen oder der mehreren Positionen (4, 5, 6) die Konfiguration einen jeweiligen Vorgang angibt, der an der jeweiligen Position des vorgegebenen Pfads (10) durchzuführen ist, wobei jeder jeweilige Vorgang eine Längsbewegung des mindestens einen Fahrzeugs (1, 2, 3) beeinflusst, wenn der Vorgang durchgeführt wird, das Verfahren umfassend:
durch eine Prozessorvorrichtung (702) eines Computersystems (700), Erhalten (301) der Konfiguration des vorgegebenen Pfads (10), und
durch die Prozessorvorrichtung (702), Erhalten (303) mindestens eines Abstands (D-4, D-5, D-6), um ihn als einen Versatz für mindestens eine Position der Konfiguration zu verwenden, wobei das Erhalten (303) des mindestens einen Abstands (D-4, D-5, D-6), um ihn als einen Versatz für die mindestens eine Position der Konfiguration zu werden, ferner das Erhalten, für jeden Fahrzeugtyp in dem mindestens einen Fahrzeug (1, 2, 3), mindestens eines typabhängigen Abstands umfasst,
durch die Prozessorvorrichtung (702), für das mindestens eine Fahrzeug (1, 2, 3), Anpassen (304) der Konfiguration durch Versetzen der mindestens einen Position der Konfiguration basierend auf dem erhaltenen mindestens einen Abstand (D-4, D-5, D-6), wodurch eine angepasste Konfiguration für das mindestens eine Fahrzeug (1, 2, 3) festgelegt wird, wobei das Anpassen der Konfiguration das Anpassen der Konfiguration durch Versetzen der mindestens einen Position der Konfiguration basierend auf dem erhaltenen mindestens einen typabhängigen Abstand umfasst, und
durch die Prozessorvorrichtung (702), Initiieren (305) des mindestens einen Fahrzeugs (1, 2, 3), in dem vorgegebenen Pfad (10) basierend auf der angepassten Konfiguration zu fahren, und
**dadurch gekennzeichnet, dass** der Versatz in der Längsrichtung des vorgegebenen Pfads (10) angewendet wird, um die Position entlang des vorgegebenen Pfads (10) zu ändern, an der der jeweilige Vorgang, der die Längsbewegung beeinflusst, derart durchgeführt wird, dass der Vorgang an unterschiedlichen Längspositionen für unterschiedliche Fahrzeuge und/oder unterschiedliche Durchfahrten des vorgegebenen Pfads (10) durchgeführt wird.

3. Verfahren nach Anspruch 2, wobei jeder jeweilige Vorgang der Konfiguration ein beliebiges oder mehrere umfasst von:
Anpassen einer Geschwindigkeit und/oder Beschleunigung des mindestens einen Fahrzeugs (1, 2, 3),
Anhaltevorgang, der durch das mindestens eine Fahrzeug (1, 2, 3) durchgeführt wird,
Bremsen und/oder Verzögern des mindestens einen Fahrzeugs (1, 2, 3), und
Schalten eines Gangs des mindestens einen Fahrzeugs (1, 2, 3).

4. Verfahren nach einem der Ansprüche 2 bis 3, wobei die Konfiguration mindestens ein Paar von Start- und Endvorgängen derart umfasst, dass ein Startvorgang konfiguriert ist, um an einer Startposition durchgeführt zu werden, und ein entsprechender Endvorgang konfiguriert ist, um an einer Endposition durchgeführt zu werden, und wobei das Anpassen der Konfiguration das Versetzen der Startposition und/oder der Endposition umfasst.

5. Verfahren nach Anspruch 4, wobei das mindestens eine Paar von Start- und Endvorgängen ein beliebiges umfasst aus:
einem Startvorgang, um das Bremsen des mindestens einen Fahrzeugs (1, 2, 3) an der Startposition zu starten, und einen Endbremsvorgang, um das Bremsen des mindestens einen Fahrzeugs (1, 2, 3) an der Endposition zu beenden; und/oder
einem Startvorgang, um eine Geschwindigkeits- und/oder Beschleunigungserhöhung des mindestens einen Fahrzeugs (1, 2, 3) an der Startposition zu starten und einen Endvorgang, um die Geschwindigkeits- und/oder Beschleunigungserhöhung des mindestens einen Fahrzeugs (1, 2, 3) an der Endposition zu beenden.

6. Verfahren nach einem der Ansprüche 2 bis 5, wobei das Erhalten (303) des mindestens einen Abstands (D-4, D-5, D-6), um ihn als einen Versatz für die mindestens eine Position der Konfiguration zu verwenden, eines oder mehrere umfasst von:
Erhalten mindestens eines vorgegebenen Abstands, und/oder
Erhalten mindestens eines Abstands (D-4, D-5, D-6) basierend auf einer Zahlengenerierung aus einem Zufallszahlengenerator und/oder einem Pseudozufallszahlengenerator.

7. Verfahren nach einem der Ansprüche 2 bis 6, wobei das Erhalten (303) des mindestens einen Abstands (D-4, D-5, D-6), um ihn als ein Versatz für die mindestens eine Position der Konfiguration zu verwenden, ferner das Erhalten mindestens einer Bedingung des vorgegebenen Pfads (10) und das Bestimmen des mindestens einen Abstands (D-4, D-5, D-6) basierend auf der erhaltenen mindestens einen Bedingung umfasst, wobei sich die mindestens eine Bedingung des vorgegebenen Pfads (10) auf ein beliebiges oder mehrere bezieht von:
- Hindernissen in mindestens einem Teil des vorgegebenen Pfads (10),
- mindestens einem weiteren Fahrzeug in mindestens einem Teil des vorgegebenen Pfads (10), und
- menschlichen Akteuren und/oder Tieren in mindestens einem Teil des vorgegebenen Pfads (10).

8. Verfahren nach einem der Ansprüche 2 bis 7, wobei das Erhalten, für jeden Fahrzeugtyp in dem mindestens einen Fahrzeug (1, 2, 3), des mindestens einen typabhängigen Abstands umfasst:
basierend auf dem jeweiligen Fahrzeugtyp, Erhalten eines Intervalls, umfassend einen maximalen Abstand und einen minimalen Abstand für den jeweiligen Fahrzeugtyp, und
Erhalten des mindestens einen typabhängigen Abstands basierend auf dem Bestimmen des mindestens einen typabhängigen Abstands aus dem erhaltenen Intervall basierend auf einer Zahl, die von einem Zufallszahlengenerator und/oder einem Pseudozufallszahlengenerator generiert wird.

9. Verfahren nach einem der Ansprüche 2 bis 8, ferner umfassend das Erhalten (302) einer Iterationsnummer, wobei die Iterationsnummer ein beliebiges angibt von:
einer Anzahl von Malen, die das mindestens eine Fahrzeug (1, 2, 3) den vorgegebenen Pfad (10) befahren hat, und/oder
einer Anzahl von Malen, die das mindestens eine Fahrzeug (1, 2, 3) eine beliebige der einen oder der mehreren Positionen befahren hat, und/oder
einer Anzahl von Malen, die das mindestens eine Fahrzeug (1, 2, 3) einen jeweiligen Vorgang von einem des einen oder der mehreren Vorgänge durchgeführt hat; und
wobei das Erhalten des mindestens einen Abstands (D-4, D-5, D-6), um ihn als einen Versatz für mindestens eine Position der Konfiguration zu verwenden, durch Verwenden der Iterationsnummer erhalten wird.

10. Verfahren nach einem der Ansprüche 2 bis 9, wobei das Anpassen (304) der Konfiguration für das mindestens eine Fahrzeug (1, 2, 3) durch Versetzen der mindestens einen Position der Konfiguration basierend auf dem erhaltenen mindestens einen Abstand (D-4, D-5, D-6) umfasst:
Anpassen der Konfiguration für ein erstes Fahrzeug (1) und für ein zweites Fahrzeug (2), wodurch eine erste angepasste Konfiguration für das erste Fahrzeug und eine zweite angepasste Konfiguration für das zweite Fahrzeug festgelegt werden, wobei sich die erste angepasste Konfiguration und die zweite angepasste Konfiguration dahingehend unterscheiden, dass mindestens eine Position der einen oder der mehreren Positionen um einen unterschiedlichen Abstand versetzt ist, und
wobei das Initiieren des mindestens einen Fahrzeugs (1, 2, 3), in dem vorgegebenen Pfad (10) basierend auf der angepassten Konfiguration zu fahren, das Initiieren des ersten Fahrzeugs (1), in dem vorgegebenen Pfad (10) basierend auf der ersten angepassten Konfiguration zu fahren, und das Initiieren des zweiten Fahrzeugs (2), in dem vorgegebenen Pfad (10) basierend auf der zweiten angepassten Konfiguration zu fahren, umfasst.

11. Fahrzeug (1, 2, 3), umfassend eine Prozessorvorrichtung (702), die konfiguriert ist, um das Verfahren nach einem der Ansprüche 2 bis 10 durchzuführen.

12. Computerprogrammprodukt, umfassend Programmcode zum Durchführen, wenn er durch eine Prozessorvorrichtung (702) ausgeführt wird, des Verfahrens nach einem der Ansprüche 2 bis 10.

13. Nichtflüchtiges, computerlesbares Speichermedium, umfassend Anweisungen, die, wenn sie durch eine Prozessorvorrichtung (702) ausgeführt werden, die Prozessorvorrichtung (702) veranlassen, das Verfahren nach einem der Ansprüche 2 bis 10 durchzuführen.

## Revendications

1. Système informatique (700) comprenant un dispositif processeur (702) configuré pour gérer une configuration d'un parcours prédéfini (10) pour au moins un véhicule (1, 2, 3), la configuration indiquant une ou plusieurs positions (4, 5, 6) dans le parcours prédéfini (10), et pour chacune parmi la ou les positions (4, 5, 6), la configuration indique une opération respective à mettre en œuvre à la position respective du parcours prédéfini (10), chaque opération respective affectant un mouvement longitudinal de l'au moins un véhicule (1, 2, 3) lors de la mise en œuvre de l'opération, le dispositif processeur (702) est configuré en outre pour :
obtenir la configuration du parcours prédéfini (10),
obtenir au moins une distance (D-4, D-5, D-6) pour le décalage d'au moins une position de la configuration, dans lequel l'obtention (303) de l'au moins une distance (D-4, D-5, D-6) à utiliser en tant que décalage pour l'au moins une position de la configuration comprend en outre l'obtention, pour chaque type de véhicule parmi l'au moins un véhicule (1, 2, 3), d'au moins une distance dépendant du type,
pour l'au moins un véhicule (1, 2, 3), ajuster la configuration en décalant l'au moins une position de la configuration en fonction de l'au moins une distance (D-4, D-5, D-6) obtenue, en établissant de ce fait une configuration ajustée pour l'au moins un véhicule (1, 2, 3), dans lequel l'ajustement de la configuration comprend l'ajustement de la configuration en décalant l'au moins une position de la configuration en fonction de l'au moins une distance dépendant du type obtenue, et
commander l'au moins un véhicule (1, 2, 3) pour qu'il opère dans le parcours prédéfini (10) en fonction de la configuration ajustée, et
**caractérisé en ce que** le décalage est appliqué dans la direction longitudinale du parcours prédéfini (10) de façon à modifier la position le long du parcours prédéfini (10) à laquelle l'opération respective affectant un mouvement longitudinal est mise en œuvre, de telle sorte que l'opération est mise en œuvre à différentes positions longitudinales pour différents véhicules et/ou différentes traversées du parcours prédéfini (10).

2. Procédé implémenté par ordinateur permettant de gérer une configuration d'un parcours prédéfini (10) pour au moins un véhicule (1, 2, 3), la configuration indiquant une ou plusieurs positions (4, 5, 6) dans le parcours prédéfini (10), et pour chacune parmi la ou les positions (4, 5, 6), la configuration indique une opération respective à mettre en œuvre à la position respective du parcours prédéfini (10), chaque opération respective affectant un mouvement longitudinal de l'au moins un véhicule (1, 2, 3) lors de la mise en œuvre de l'opération, le procédé comprenant :
par un dispositif processeur (702) d'un système informatique (700), l'obtention (301) de la configuration du parcours prédéfini (10), et
par le dispositif processeur (702), l'obtention (303) d'au moins une distance (D-4, D-5, D-6) à utiliser en tant que décalage pour au moins une position de la configuration, dans lequel l'obtention (303) de l'au moins une distance (D-4, D-5, D-6) à utiliser en tant que décalage pour l'au moins une position de la configuration comprend en outre l'obtention, pour chaque type de véhicule parmi l'au moins un véhicule (1, 2, 3), d'au moins une distance dépendant du type,
par le dispositif processeur (702), pour l'au moins un véhicule (1, 2, 3), l'ajustement (304) de la configuration en décalant l'au moins une position de la configuration en fonction de l'au moins une distance (D-4, D-5, D-6) obtenue, en établissant de ce fait une configuration ajustée pour l'au moins un véhicule (1, 2, 3), dans lequel l'ajustement de la configuration comprend l'ajustement de la configuration en décalant l'au moins une position de la configuration en fonction de l'au moins une distance dépendant du type obtenue, et
par le dispositif processeur (702), la commande (305) de l'au moins un véhicule (1, 2, 3) pour qu'il opère dans le parcours prédéfini (10) en fonction de la configuration ajustée, et
**caractérisé en ce que** le décalage est appliqué dans la direction longitudinale du parcours prédéfini (10) de façon à modifier la position le long du parcours prédéfini (10) à laquelle l'opération respective affectant un mouvement longitudinal est mise en œuvre, de telle sorte que l'opération est mise en œuvre à différentes positions longitudinales pour différents véhicules et/ou différentes traversées du parcours prédéfini (10).

3. Procédé selon la revendication 2 dans lequel chaque opération respective de la configuration comprend l'un quelconque ou plusieurs quelconques parmi :
l'ajustement d'une vitesse et/ou d'une accélération de l'au moins un véhicule (1, 2, 3),
une opération d'arrêt mise en œuvre par l'au moins un véhicule (1, 2, 3),
un freinage et/ou une décélération de l'au moins un véhicule (1, 2, 3), et
un passage de rapport de l'au moins un véhicule (1, 2, 3).

4. Procédé selon l'une quelconque des revendications 2 à 3 dans lequel la configuration comprend au moins une paire d'opérations de départ et de fin de telle sorte qu'une opération de départ est configurée pour être mise en œuvre au niveau d'une position de départ et une opération de fin correspondante est configurée pour être mise en œuvre au niveau d'une position de fin, et dans lequel l'ajustement de la configuration comprend le décalage de la position de départ et/ou de la position de fin.

5. Procédé selon la revendication 4 dans lequel l'au moins une paire d'opérations de départ et de fin comprend l'une quelconque parmi :
une opération de départ pour commencer à freiner l'au moins un véhicule (1, 2, 3) à la position de départ et une opération de fin de freinage pour mettre fin au freinage de l'au moins un véhicule (1, 2, 3) au niveau de la position de fin ; et/ou
une opération de départ pour commencer une augmentation de vitesse et/ou d'accélération de l'au moins un véhicule (1, 2, 3) à la position de départ et une opération de fin pour mettre fin à l'augmentation de vitesse et/ou d'accélération de l'au moins un véhicule (1, 2, 3) à la position de fin.

6. Procédé selon l'une quelconque des revendications 2 à 5, dans lequel l'obtention (303) de l'au moins une distance (D-4, D-5, D-6) à utiliser en tant que décalage pour l'au moins une position de la configuration comprend l'une quelconque ou plusieurs quelconques parmi :
l'obtention d'au moins une distance prédéfinie, et/ou
l'obtention d'au moins une distance (D-4, D-5, D-6) en fonction d'une génération de nombre par un générateur de nombre aléatoire et/ou un générateur de nombre pseudoaléatoire.

7. Procédé selon l'une quelconque des revendications 2 à 6, dans lequel l'obtention (303) de l'au moins une distance (D-4, D-5, D-6) à utiliser en tant que décalage pour l'au moins une position de la configuration comprend en outre l'obtention d'au moins une condition du parcours prédéfini (10), et la détermination de l'au moins une distance (D-4, D-5, D-6) en fonction de l'au moins une condition obtenue, dans lequel l'au moins une condition du parcours prédéfini (10) se rapporte à l'un quelconque ou plusieurs quelconques parmi :
- des obstacles dans au moins une partie du parcours prédéfini (10),
- au moins un autre véhicule dans au moins une partie du parcours prédéfini (10), et
- des acteurs humains et/ou des animaux dans au moins une partie du parcours prédéfini (10).

8. Procédé selon l'une quelconque des revendications 2 à 7, dans lequel l'obtention, pour chaque type de véhicule parmi l'au moins un véhicule (1, 2, 3), de l'au moins une distance dépendant du type comprend :
en fonction du type respectif de véhicule, l'obtention d'un intervalle comprenant une distance maximale et une distance minimale pour le type respectif de véhicule, et
l'obtention de l'au moins une distance dépendant du type en fonction de la détermination de l'au moins une distance dépendant du type à partir de l'intervalle obtenu en fonction d'un nombre généré à partir d'un générateur de nombre aléatoire et/ou d'un générateur de nombre pseudoaléatoire.

9. Procédé selon l'une quelconque des revendications 2 à 8, comprenant en outre l'obtention (302) d'un nombre d'itérations, le nombre d'itérations indiquant l'un quelconque parmi :
un nombre de fois que l'au moins un véhicule (1, 2, 3) a emprunté le parcours prédéfini (10), et/ou
un nombre de fois que l'au moins un véhicule (1, 2, 3) a emprunté l'une quelconque parmi la ou les positions, et/ou
un nombre de fois que l'au moins un véhicule (1, 2, 3) a mis en œuvre une opération respective de l'un parmi la ou les opérations ; et
dans lequel l'obtention de l'au moins une distance (D-4, D-5, D-6) à utiliser en tant que décalage pour au moins une position de la configuration est obtenue en utilisant le nombre d'itérations.

10. Procédé selon l'une quelconque des revendications 2 à 9, dans lequel l'ajustement (304) de la configuration pour l'au moins un véhicule (1, 2, 3) en décalant l'au moins une position de la configuration en fonction de l'au moins une distance (D-4, D-5, D-6) obtenue comprend :
l'ajustement de la configuration pour un premier véhicule (1) et pour un second véhicule (2), en établissant de ce fait une première configuration ajustée pour le premier véhicule et une seconde configuration ajustée pour le second véhicule, la première configuration ajustée et la seconde configuration ajustée différant en ce qu'au moins une position de la ou des positions est décalée d'une distance différente, et
dans lequel la commande de l'au moins un véhicule (1, 2, 3) pour qu'il opère dans le parcours prédéfini (10) en fonction de la configuration ajustée comprend la commande du premier véhicule (1) pour qu'il opère dans le parcours prédéfini (10) en fonction de la première configuration ajustée et la commande du second véhicule (2) pour qu'il opère dans le parcours prédéfini (10) en fonction de la seconde configuration ajustée.

11. Véhicule (1, 2, 3) comprenant un dispositif processeur (702) configuré pour mettre en œuvre le procédé selon l'une quelconque des revendications 2 à 10.

12. Produit programme informatique comprenant un code de programme permettant de mettre en œuvre, lorsqu'il est exécuté par un dispositif processeur (702), le procédé selon l'une quelconque des revendications 2 à 10.

13. Support de stockage non transitoire lisible par ordinateur comprenant des instructions qui, lorsqu'elles sont exécutées par un dispositif processeur (702), amènent le dispositif processeur (702) à mettre en œuvre le procédé selon l'une quelconque des revendications 2 à 10.
